# EUROPEAN PATENT APPLICATION

(11) **EP 2 919 135 A1**
(43) Date of publication of application: **16.09.2015**
(21) Application number: 14198846.9
(22) Date of filing: 18.12.2014
(51) Int. Cl.: G06F 17/30, G06Q 30/02

(54) **Method and device for providing information**

(30) Priority: 10.03.2014 CN 201410086388
(71) Applicant: Baidu Online Network Technology (Beijing) Co., Ltd, Beijing 100085 (CN)
(72) Inventor: Xue, Jingjing, 100085 Beijing (CN)
(74) Representative: Pizzoli, Antonio

(57) **Abstract**

The present invention provides a method and a device for providing information. The method comprises: obtaining an uploaded video; obtaining a key frame associated with a content of a recommended video from the video, and obtaining associated information of the content of the recommended video; and sending the video and the associated information to a player such as to play the video in the player and to display the associated information when the key frame is played. With the method for providing information, a user may obtain associated information associated with an implantable advertisement or a scene in a video conveniently and efficiently; in addition, a conversion rate for converting various types of implantable advertisements into actual buying behaviors can be enhanced.

## Description

### FIELD

The present disclosure relates to an internet technology, and more particularly relates to a method and device for providing information.

### BACKGROUND

At present, implantable advertisements are often implanted in videos on a TV and internet. More particularly, the basic necessities of life of actors in fashion shows are received with adulation by fans.

If a user wants to obtain the implantable advertisements from the videos, firstly in the process of watching videos, the user needs to find the contents he/she is interested in, such as costumes of one protagonist, locations where the videos are shot on, and then the user searches through a search engine or posts in various forums to obtain the contents he/she wants to know, such as brands or prices of the costumes of one protagonist, a tourist guide of a location where a video is shot on, moreover, the user may purchase commodities (such as the costumes of one protagonist) he/she is interested in through e-commerce.

However, there are problems in the above process that the processes of obtaining the implantable advertisements, obtaining associated information of the implantable advertisements and consuming according to the associated information are separated, and that there are obstacles in the process of obtaining the implantable advertisements, for example, how to determine a key word to be searched with if the user finds a style of a costume. Thus, there is a lack of a convenient and efficient way to promote the implantable advertisements to users.

### SUMMARY

Embodiments of the present disclosure seek to solve at least one of the problems existing in the related art to at least some extent.

Accordingly, a first objective of the present disclosure is to provide a method for providing information. With the method for providing information, a user may obtain associated information associated with an implantable advertisement or a scene in a video conveniently and efficiently.

A second objective of the present disclosure is to provide another method for providing information.

A third objective of the present disclosure is to provide a device for providing information.

A fourth objective of the present disclosure is to provide another device for providing information.

A fifth objective of the present disclosure is to provide a computer readable storage medium.

In order to achieve the above objectives, embodiments of a first aspect of the present disclosure provide a method for providing information. The method comprises: obtaining an uploaded video; obtaining a key frame associated with a content of a recommended video from the video, and obtaining associated information of the content of the recommended video; sending the video and the associated information to a player such as to play the video in the player and to display the associated information when the key frame is played.

In order to achieve the above objectives, embodiments of a second aspect of the present disclosure provide a method for providing information. The method comprises: obtaining and playing a video, wherein the video comprises a key frame associated with a content of a recommended video; obtaining associated information of the content of the recommended video when the key frame associated with the content of the recommended video is played, and displaying the associated information.

In order to achieve the above objectives, embodiments of a third aspect of the present disclosure provide a device for providing information. The device comprises: a first obtaining module, configured for obtaining an uploaded video; a second obtaining module, configured for obtaining a key frame associated with a content of a recommended video from the video; a third obtaining module, configured for obtaining associated information of the content of the recommended video; a sending module, configured for, sending the video and the associated information to a player such as to play the video in the player and to display the associated information when the key frame is played.

In order to achieve the above objectives, embodiments of a fourth aspect of the present disclosure provide a device for providing information. The device comprises: a first obtaining module, configured for obtaining and playing a video, wherein the video comprises a key frame associated with a content of a recommended video; a second obtaining module, configured for obtaining associated information of the content of the recommended video when the key frame associated with the content of the recommended video is played; a displaying module, configured for displaying the associated information.

With the method and device for providing information according to embodiments of the present disclosure, when the user watches the video, the key frame associated with the content of the recommended video from the video may be provided to the user, such that the user may obtain associated information of the implantable advertisement and the scene in the video conveniently and efficiently, thus satisfying the user's requirement. Moreover, the chance of purchasing commodities according to the various advertisements implanted in the video is multiplied and the relationships between users and users, between users and videos, between users and commodities are established thus enhancing the interaction. In particular, against a background of a rapid development of smart TVs, due to the inconvenience of the interaction with the TV and the exclusivity of the video on the TV, the user cannot obtain associated information quickly and directly, which can be solved with the method according to embodiments of the present disclosure.

In order to achieve the above objectives, embodiments of a fifth aspect of the present disclosure provide a computer readable storage medium. The computer readable storage medium comprises a computer program for executing the method for providing information according to the first aspect of the present disclosure or the second aspect of the present disclosure, when running on a computer.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the accompanying drawings, in which:
Fig. 1 is a flow chart of a method for providing information according to one embodiment of the present disclosure;
Fig. 2 is a block diagram of a device for providing information according to one embodiment of the present disclosure;
Fig. 3 is a flow chart of a method for providing information according to another embodiment of the present disclosure;
Fig. 4 is a block diagram of a device for providing information according to another embodiment of the present disclosure.

### DETAILED DESCRIPTION

Reference will be made in detail to embodiments of the present disclosure, where the same or similar elements and the elements having same or similar functions are denoted by like reference numerals throughout the descriptions. The embodiments described herein with reference to drawings are explanatory, illustrative, and used to generally understand the present disclosure. The embodiments shall not be construed to limit the present disclosure. Instead, the embodiments of the present disclosure comprise all the variants, modifications and their equivalents within the spirit and scope of the present disclosure as defined by the claims.

Those skilled in the art shall understand that terms such as "first" and "second" are used herein for purposes of description and are not intended to indicate or imply relative importance or significance. Thus, the feature defined with "first" and "second" may comprise one or more this feature. In the present invention, unless specified or limited otherwise, the terms "mounted," "connected," "coupled," "fixed" and the like are used broadly, and may be, for example, fixed connections, detachable connections, or integral connections; may also be mechanical or electrical connections; may also be direct connections or indirect connections via intervening structures; may also be inner communications of two elements, which can be understood by those skilled in the art according to specific situations. In the description of the present disclosure, "a plurality of" means two or more than two, unless specified otherwise.

It will be understood that, the flow chart or any process or method described herein in other manners may represent a module, segment, or portion of code that comprises one or more executable instructions to implement the specified logic function(s) or that comprises one or more executable instructions of the steps of the progress. And the scope of a preferred embodiment of the present disclosure includes other implementations in which the order of execution may differ from that which is depicted in the flow chart, which should be understood by those skilled in the art.

At present, implantable advertisements are often implanted in videos. However, the implantable advertisements are not easy to store and record. If a user wants to know more about the implantable advertisements or other information associated with the scenes of the videos, the user has to search by himself/herself, such that the information cannot be provided to the user in a convenient and efficient way.

Therefore, the present disclosure provides a method for providing information including: obtaining an uploaded video; obtaining a key frame associated with a content of a recommended video from the video, and obtaining associated information of the content of the recommended video; sending the video and the associated information to a player such as to play the video in the player and to display the associated information when the key frame is played.

The method and device for providing information according to embodiments of the present disclosure will be described with reference to drawings.

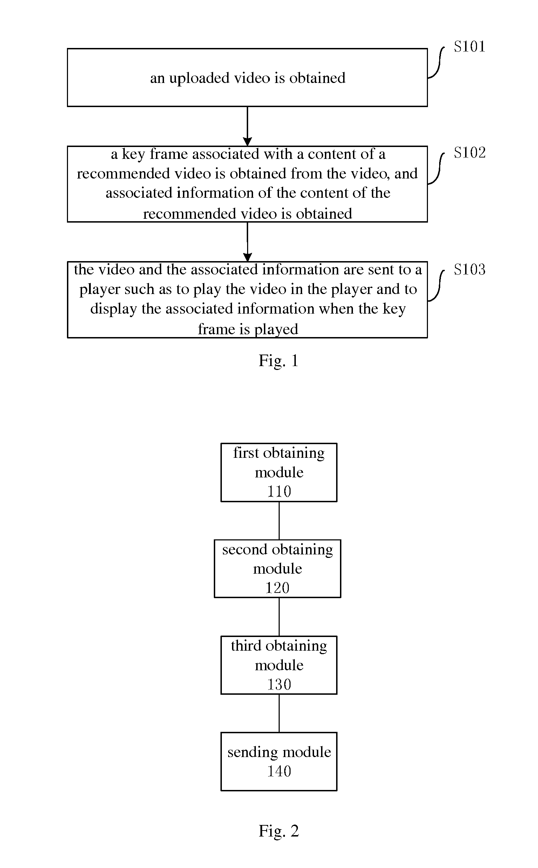

Fig. 1 is a flow chart of a method for providing information according to one embodiment of the present disclosure.

As shown in Fig. 1, the method for providing information includes the following steps.

In step S101, an uploaded video is obtained.

Specifically, the video may be uploaded by a video producer or other owners to a server.

In step S102, a key frame associated with a content of a recommended video is obtained from the video, and associated information of the content of the recommended video is obtained.

Specifically, the content of the recommended video may be the implantable advertisement, or may be a content associated with a scene of the video, such as a consume, a makeup, a furniture, a consuming place, a country, a city or a tourist attraction and so on. If the user views the content, various requirements may be generated, one kind of which is discussing and communicating his/her views about the content, the other kind of which is an actual demand, such as purchasing a consume with the same brand, consuming at the same consuming place, traveling to the same country, city or tourist attraction and so on.

Thus, firstly it is necessary to determine the content of the recommended video. In one embodiment of the present disclosure, the content of the recommended video may be directly abstracted manually on the server, and then the key frame associated with the content of the recommended video may be determined. In another embodiment of the present disclosure, key frames with the same scene may be obtained from the video, and then the key frames with the same scene may be defined as the key frame associated with the content of the recommended video, specifically, the video may be parsed by the server using the powerful computing capability and the key frames with the same scene may be obtained from the video, and then the key frames may be automatically parsed to obtain the content of the recommended video, for example, the key frames may be automatically parsed by the server using various recognition technologies to obtain the content of the recommended video, and the automatic parsing process may refer to the prior art, which is not described herein.

The associated information of the content of the recommended video is a kind of information generated according to the user's requirement. In one embodiment of the disclosure, the associated information may include one or more of the followings: a commodity associated with the content of the recommended video, a brand of the commodity, a price of the commodity, a link for purchasing the commodity, an associated website, a social network, a chatting group, a scene, a website associated with the scene, a product associated with the scene, a link for purchasing the product.

In one embodiment, the step of obtaining associated information of the content of the recommended video includes the steps of recognizing the key frame associated with the content of the recommended video to obtain a search keyword, and searching with the search keyword to obtain the associated information of the content of the recommended video, and/or receiving the associated information sent by a user and/or an advertiser, and associating the associated information with the content of the recommended video.

It will be understood that, the associated information obtained by the server by parsing and querying and the associated information sent by a user and/or an advertiser may be stored in a corresponding database.

In step S103, the video and the associated information are sent to a player such as to play the video in the player and to display the associated information when the key frame is played.

Specifically, if a playing request is received from the player, the video and the associated information may be sent together to the player, and then the video may be played in the player and the associated information may be displayed when the key frame is played. Or, if the playing request is received from the player, firstly the video may be sent to the player, and then a sending request of the associated information may be sent to the server when the key frame is played, and then the server sends the associated information to the player to be displayed in the player.

It will be understood that, the method for providing information provided in the embodiments of the present disclosure may be applied to various video playing systems, smart TVs, various internet-TV Boxes, video playing websites, video playing applications and so on, which is not limited in embodiments of the present disclosure.

It will be understood that, the player may be a TV, a smart phone, a tablet PC, a computer and so on. If the player is the TV, the associated information may be displayed in the smart phone, the tablet PC, or a computer of the user due to the inconvenience of the interaction with the TV and the exclusivity of the video on the TV, such that the user may subscribe to the associated information or the server may push the associated information.

With the method for providing information according to embodiments of the present disclosure, when the user watches the video, the key frame associated with the content of the recommended video from the video may be provided to the user, such that the user may obtain associated information of the implantable advertisement and the scene in the video conveniently and efficiently, thus satisfying the user's requirement. Moreover, the chance of purchasing commodities according to the various advertisements implanted in the video is multiplied and the relationships between users and users, between users and videos, between users and commodities are established thus enhancing the interaction. In particular, against a background of a rapid development of smart TVs, due to the inconvenience of the interaction with the TV and the exclusivity of the video on the TV, the user cannot obtain associated information quickly and directly, which can be solved with the method according to embodiments of the present disclosure.

In order to implement the above embodiments, embodiments of the present disclosure provide a device for providing information.

Fig. 2 is a block diagram of a device for providing information according to one embodiment of the present disclosure.

As shown in Fig. 2, the device for providing information includes a first obtaining module 110, a second obtaining module 120, a third obtaining module 130 and a sending module 140.

Specifically, the first obtaining module 110 is configured for obtaining an uploaded video. The video may be uploaded by a video producer or other owners to the first obtaining module 110.

The second obtaining module 120 is configured for obtaining a key frame associated with a content of a recommended video from the video.

The content of the recommended video may be the implantable advertisement, or may be a content associated with a scene of the video, such as a consume, a makeup, a furniture, a consuming place, a country, a city or a tourist attraction and so on. If the user views the content, various requirements may be generated, one kind of which is discussing and communicating his/her views about the content, the other kind of which is an actual demand, such as purchasing a consume with the same brand, consuming at the same consuming place, traveling to the same country, city or tourist attraction and so on.

Thus, firstly it is necessary to determine the content of the recommended video. In one embodiment of the present disclosure, the content of the recommended video may be directly abstracted manually on the server, and then the key frame associated with the content of the recommended video may be determined, such that the second obtaining module 120 may obtain the key frame associated with the content of the recommended video. In another embodiment of the present disclosure, the second obtaining module 120 is configured for obtaining key frames with the same scene from the video, and then defining the key frames with the same scene as the key frame associated with the content of the recommended video, specifically, the video may be parsed by the second obtaining module 120 using the powerful computing capability and the key frames with the same scene may be obtained from the video, and then the key frames may be automatically parsed to obtain the content of the recommended video, for example, the key frames may be automatically parsed by the second obtaining module 120 using various recognition technologies to obtain the content of the recommended video, and the automatic analyzing process may refer to the prior art, which is not described herein.

The third obtaining module 130 is configured for obtaining associated information of the content of the recommended video.

The associated information of the content of the recommended video is a kind of information generated according to the user's requirement. In one embodiment of the disclosure, the associated information may include one or more of the followings: a commodity associated with the content of the recommended video, a brand of the commodity, a price of the commodity, a link for purchasing the commodity, an associated website, a social network, a chatting group, a scene, a website associated with the scene, a product associated with the scene, a link for purchasing the product.

In one embodiment, the third obtaining module 130 is further configured for obtaining associated information of the content of the recommended video including the steps of recognizing the key frame associated with the content of the recommended video to obtain a search keyword, and searching with the search keyword to obtain the associated information of the content of the recommended video, and/or receiving the associated information sent by a user and/or an advertiser, and associating the associated information with the content of the recommended video.

It will be understood that, the associated information obtained by the third obtaining module 130 by parsing and querying and the associated information sent by a user and/or an advertiser may be stored in a corresponding database.

The sending module 140 is configured for sending the video and the associated information to a player such as to play the video in the player and to display the associated information when the key frame is played. If a playing request is received from the player, the sending module 140 may send the video and the associated information together to the player, and then the video may be played in the player and the associated information may be displayed when the key frame is played. Or, if the playing request is received from the player, firstly the sending module 140 may send the video to the player, and then a sending request of the associated information may be sent to the sending module 140 when the key frame is played, and then the sending module 140 may send the associated information to the player to be displayed in the player.

It will be understood that, the device for providing information provided in the embodiments of the present disclosure may be applied to various video playing systems, smart TVs, various internet-TV Boxes, video playing websites, video playing applications and so on, which is not limited in embodiments of the present disclosure.

It will be understood that, the player may be a TV, a smart phone, a tablet PC, a computer and so on. If the player is the TV, the associated information may be displayed in the smart phone, the tablet PC, or a computer of the user due to the inconvenience of the interaction with the TV and the exclusivity of the video on the TV, such that the user may subscribe to the associated information or the server may push the associated information.

With the device for providing information according to embodiments of the present disclosure, when the user watches the video, the key frame associated with the content of the recommended video from the video may be provided to the user, such that the user may obtain associated information of the implantable advertisement and the scene in the video conveniently and efficiently, thus satisfying the user's requirement. Moreover, the chance of purchasing commodities according to the various advertisements implanted in the video is multiplied and the relationships between users and users, between users and videos, between users and commodities are established thus enhancing the interaction. In particular, against a background of a rapid development of smart TVs, due to the inconvenience of the interaction with the TV and the exclusivity of the video on the TV, the user cannot obtain associated information quickly and directly, which can be solved with the method according to embodiments of the present disclosure.

Embodiments of the present disclosure provide another method for providing information, including: obtaining and playing a video, in which the video includes a key frame associated with a content of a recommended video; obtaining associated information of the content of the recommended video when the key frame associated with the content of the recommended video is played, and displaying the associated information.

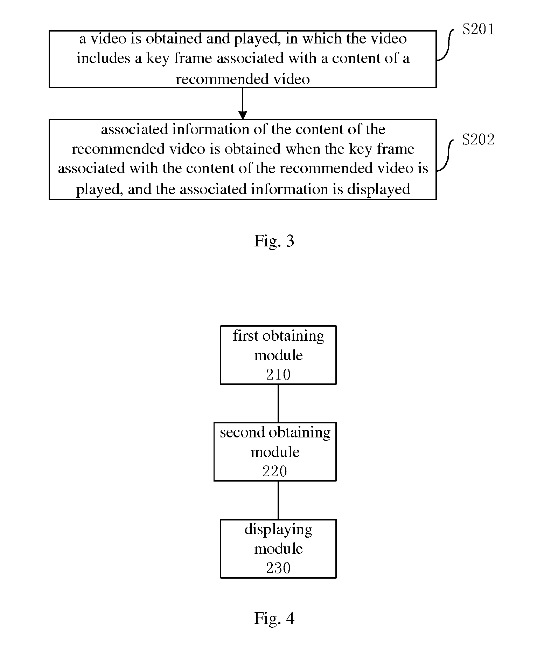

Fig. 3 is a flow chart of a method for providing information according to another embodiment of the present disclosure.

As shown in Fig. 3, the method for providing information includes the following steps.

In step S301, a video is obtained and played, in which the video includes a key frame associated with a content of a recommended video.

For example, a playing instruction is sent by a player to a server to obtain a video from the server. The video includes the key frame associated with the content of the recommended video. The process of obtaining the key frame associated with the content of the recommended video has been described in detail in the above embodiments, which is not described herein.

In step S302, associated information of the content of the recommended video is obtained when the key frame associated with the content of the recommended video is played, and the associated information is displayed.

Specifically, the player may obtain the associated information at the time when obtaining the video, and may display the associated information when the key frame associated with the content of the recommended video is played; or the player may only obtain the video, and then may obtain the associated information from the server to display when the key frame associated with the content of the recommended video is played. The associated information and the process of obtaining the associated information have been described in detail in the above embodiments, which are not described herein.

With the method for providing information according to embodiments of the present disclosure, when the user watches the video, the key frame associated with the content of the recommended video from the video may be provided to the user, such that the user may obtain associated information of the implantable advertisement and the scene in the video conveniently and efficiently, thus satisfying the user's requirement. Moreover, the chance of purchasing commodities according to the various advertisements implanted in the video is multiplied and the relationships between users and users, between users and videos, between users and commodities are established thus enhancing the interaction. In particular, against a background of a rapid development of smart TVs, due to the inconvenience of the interaction with the TV and the exclusivity of the video on the TV, the user cannot obtain associated information quickly and directly, which can be solved with the method according to embodiments of the present disclosure.

In order to implement the above embodiments, the present disclosure provides a device for providing information, including a first obtaining module, configured for obtaining and playing a video, in which the video includes a key frame associated with a content of a recommended video; a second obtaining module, configured for obtaining associated information of the content of the recommended video when the key frame associated with the content of the recommended video is played; a displaying module, configured for displaying the associated information.

Fig. 4 is a block diagram of a device for providing information according to another embodiment of the present disclosure.

As shown in Fig. 4, the device for providing information includes: a first obtaining module 210, a second obtaining module 220 and a displaying module 230.

The first obtaining module 210 is configured for obtaining and playing a video, in which the video includes the key frame associated with the content of the recommended video. For example, the first obtaining module 210 sends a playing instruction to a server, and then obtains the video from the server. The video includes the key frame associated with the content of the recommended video. The process of obtaining the key frame associated with the content of the recommended video has been described in detail in the above embodiments, which is not described herein.

The second obtaining module 220 is configured for obtaining associated information of the content of the recommended video when the key frame associated with the content of the recommended video is played. More specifically, the second module 220 may obtain the associated information at the time when obtaining the video, and may display the associated information when the key frame associated with the content of the recommended video is played; or the second obtaining module 220 may only obtain the video, and then may obtain the associated information from the server to display when the key frame associated with the content of the recommended video is played. The associated information and the process of obtaining the associated information have been described in detail in the above embodiments, which are not described herein.

The displaying module 230 is configured for displaying the associated information.

With the device for providing information according to embodiments of the present disclosure, when the user watches the video, the key frame associated with the content of the recommended video from the video may be provided to the user, such that the user may obtain associated information of the implantable advertisement and the scene in the video conveniently and efficiently, thus satisfying the user's requirement. Moreover, the chance of purchasing commodities according to the various advertisements implanted in the video is multiplied and the relationships between users and users, between users and videos, between users and commodities are established thus enhancing the interaction. In particular, against a background of a rapid development of smart TVs, due to the inconvenience of the interaction with the TV and the exclusivity of the video on the TV, the user cannot obtain associated information quickly and directly, which can be solved with the method according to embodiments of the present disclosure.

A computer readable storage medium according to embodiments of the present disclosure is also provided. The computer readable storage medium comprises a computer program for executing the method for providing information according to the above embodiments of the present disclosure, when running on a computer.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Reference throughout this specification to "one embodiment", "some embodiments," "an embodiment" , "a specific example," or "some examples," means that a particular feature, structure, material, or characteristic described in connection with the embodiment or example is included in at least one embodiment or example of the present disclosure. Thus, the appearances of the phrases in various places throughout this specification are not necessarily referring to the same embodiment or example of the present disclosure. Furthermore, the particular features, structures, materials, or characteristics may be combined in any suitable manner in one or more embodiments or examples. In addition, in a case without contradictions, different embodiments or examples or features of different embodiments or examples may be combined by those skilled in the art.

Although explanatory embodiments have been shown and described, it would be appreciated that the above embodiments are explanatory and cannot be construed to limit the present disclosure, and changes, alternatives, and modifications can be made in the embodiments without departing from scope of the present disclosure by those skilled in the art.

## Claims

1. A method for providing information, comprising:
obtaining an uploaded video;
obtaining a key frame associated with a content of a recommended video from the video, and obtaining associated information of the content of the recommended video;
sending the video and the associated information to a player such as to play the video in the player and to display the associated information when the key frame is played.

2. The method according to claim 1, wherein obtaining a key frame associated with a content of a recommended video from the video comprises:
obtaining key frames with a same scene from the video, and defining the key frames with a same scene as the key frame associated with the content of the recommended video.

3. The method according to claim 1 or 2, wherein obtaining associated information of the content of the recommended video comprises:
recognizing the key frame associated with the content of the recommended video to obtain a search keyword, and searching with the search keyword to obtain the associated information of the content of the recommended video; and/or
receiving the associated information sent by a user and/or an advertiser, and associating the associated information with the content of the recommended video.

4. The method according to any one of claims 1-3, wherein the associated information comprises at least one selected from a group consisting of: a brand of a commodity, a price of the commodity, a link for purchasing the commodity, an associated website, a social network, a chatting group, a scene, a website associated with the scene, a product associated with the scene, a link for purchasing the product.

5. A method for providing information, comprising:
obtaining and playing a video, wherein the video comprises a key frame associated with a content of a recommended video;
obtaining associated information of the content of the recommended video when the key frame associated with the content of the recommended video is played, and displaying the associated information.

6. A device for providing information, comprising:
a first obtaining module, configured for obtaining an uploaded video;
a second obtaining module, configured for obtaining a key frame associated with a content of a recommended video from the video;
a third obtaining module, configured for obtaining associated information of the content of the recommended video;
a sending module, configured for, sending the video and the associated information to a player such as to play the video in the player and to display the associated information when the key frame is played.

7. The device according to claim 6, wherein the second obtaining module is further configured for obtaining key frames with a same scene from the video, and for defining the key frames with a same scene as the key frame associated with the content of the recommended video.

8. The device according to claim 6 or 7, wherein the third obtaining module is further configured for:
recognizing the key frame associated with the content of the recommended video to obtain a search keyword, and for searching with the search keyword to obtain the associated information of the content of the recommended video; and/or
receiving the associated information sent by a user and/or an advertiser, and for associating the associated information with the content of the recommended video.

9. The device according to any one of claims 6-8, wherein the associated information comprises at least one selected from a group consisting of: a brand of a commodity, a price of the commodity, a link for purchasing the commodity, an associated website, a social network, a chatting group, a scene, a website associated with the scene, a product associated with the scene, a link for purchasing the product.

10. A device for providing information, comprising:
a first obtaining module, configured for obtaining and playing a video, wherein the video comprises a key frame associated with a content of a recommended video;
a second obtaining module, configured for obtaining associated information of the content of the recommended video when the key frame associated with the content of the recommended video is played;
a displaying module, configured for displaying the associated information.

11. A computer readable storage medium, comprising a computer program for executing a method for providing information according to any one of claims 1 to 5 when running on a computer.
